# EUROPEAN PATENT APPLICATION

(11) **EP 0 884 254 A1**
(43) Date of publication of application: **16.12.1998**
(21) Application number: 97122498.5
(22) Date of filing: 19.12.1997
(51) Int. Cl.: B65G 47/08, B65G 17/42, B65G 17/32

(54) **Apparatus for conveying products or packs in groups**

(30) Priority: 12.06.1997 IT MI971392
(71) Applicant: CAMA 1 SpA, 20131 Milano (IT)
(72) Inventor: Bellante, Paolo, 20090 Segrate (Milano) (IT)
(74) Representative: Petruzziello, Aldo

(57) **Abstract**

An apparatus for group conveying of products or packs (P) coming from a production line and directed, for example, towards cartooning, comprising an endless conveyor (T), consisting of at least one metal belt (1, 2), on which groups (3) of pockets (30) are removably fixed so as to be interchangeable and replaceable with groups of a different number and size of pockets.

## Description

The present invention relates to an apparatus for conveying products or packs coming one after the other from one or more feed conveyors, particularly packaging lines in the food industry or in other packing sectors.

Apparatuses of the above type are already known and are used mainly for transferring foodstuffs and other products, coming from a wrapping machine for example, to a subsequent cartooning station, where these products are taken individually or in groups and put into suitable container boxes or diverted to subsequent grouping systems.

As far as possible, these apparatuses must even out the different feed rate or discontinuities of the incoming products, and allow the products to be arranged in small groups for picking up or diversion in the final part of the apparatus.

For this purpose, apparatuses have been designed in which the products are collected individually in independent seats or pockets; these pockets are generally integral with the endless conveyors (chains, belts, etc.) which enable the products to be transferred from the feed area to the picking up area for loading or for subsequent diversion to further conveyor systems.

An apparatus of this type, having two parallel conveyors, with groups of products that follow one another, is described, for example, in Italian patent application MI-94A 001703, in the name of the same applicant.

However, on said apparatuses for group conveying of products the need is felt for a considerable reduction of the time taken by the operations for adapting them to new shapes or sizes of products to be packaged, so as not to stop the production lines upstream (ovens, metering machines, fillers, etc.) for long periods, as in the case of complex replacements of entire pocket chains, with a strictly fixed size, or laborious adjustments or replacements of each individual product collection pocket.

The object of the invention is precisely that of solving said problem and eliminating the above drawbacks, providing an apparatus for conveying groups of products or packs that is of simple construction, in which the time taken to adapt to changes of product format or new desired configurations is reduced to a minimum.

The apparatus according to the invention has the characteristics listed in appended independent claim 1.

Advantageous embodiments of the invention are described in the dependent claims.

Essentially, the apparatus according to the invention comprises a endless conveyor consisting of at least one variable-speed metal belt, provided with groups of pockets integral with a foil or portion of metal belt that can be coupled to the conveyor belt. The portion of belt provided with groups of pockets is advantageously mounted on the conveyor belt so as to permit slight longitudinal movements, in order to allow it to wind without problems on the curved parts of the endless circuit, in that it is free to slide a short distance.

With this solution portions of belt with the desired number and size of pockets can be prepared, replacing them rapidly on the conveyor belt where engaging means, for example holes, are provided at regular intervals for these portions of belt.

Further characteristics of the invention will be made clearer by the detailed description given below, which refers to a purely exemplary and therefore non-limiting embodiment thereof, illustrated in the appended drawings, in which:
Figure 1 is a diagrammatic top plan view of an apparatus with a conveyor having two belts side by side, according to the invention;
Figure 2 is a diagrammatic longitudinal section taken along the line II-II in Figure 1;

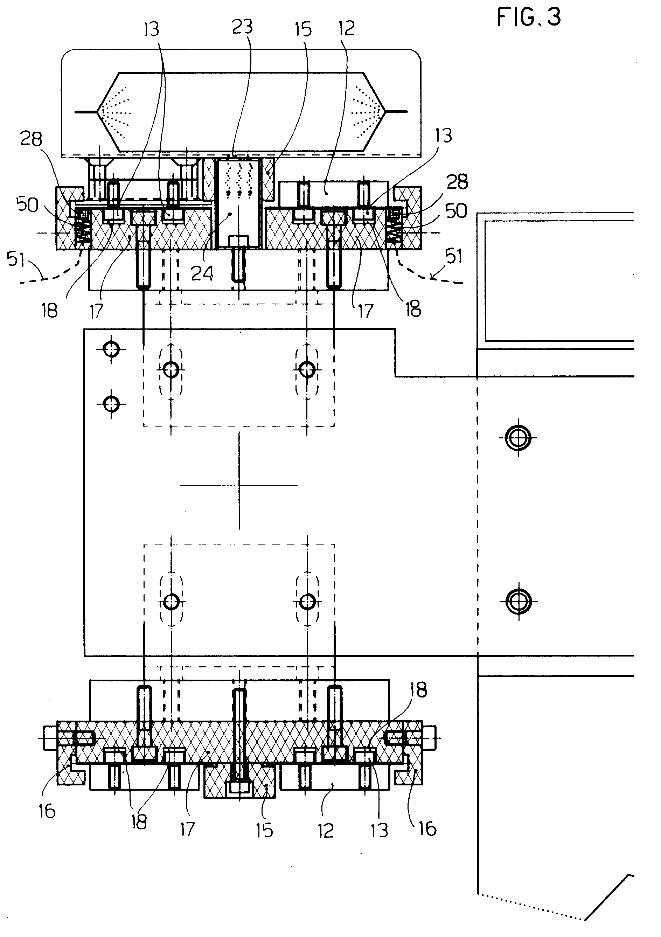

Figure 3 is a cross section taken along the line III-III in Figure 2;
Figure 4 is a cross section taken along the line IV-IV in Figure 2;
Figure 5 is a top plan view of a portion of a conveyor belt carrying a group of pockets;
Figure 6 is a diagrammatic section taken along the line VI-VI in Figure 5;
Figure 7 is a section taken along the line VII-VII in Figure 6;
Figure 8 is a section taken along the line VIII-VIII in Figure 6.

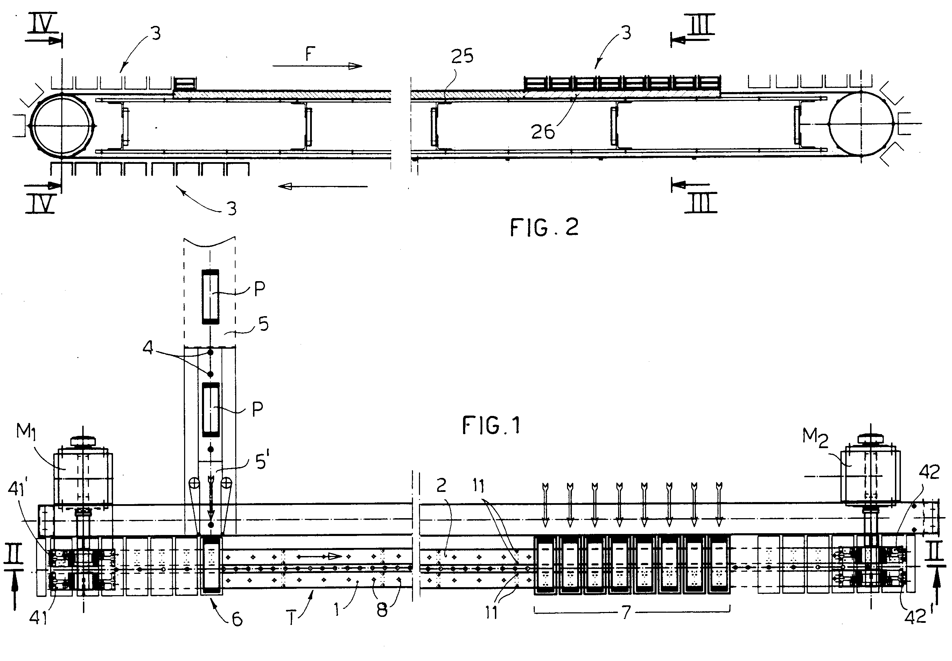

With reference to these drawings, and for the moment particularly to Figure 1, reference numeral 5 indicates a feed belt, coming for example from a wrapping machine or production line, by means of which the products P, which may be unevenly spaced, are fed, passing on photoelectric cells 4 which are able to measure the correct distance of the products P, which subsequently reach a second accelerator-inserter belt 5'.

A minimum distance between the products is thus guaranteed, this distance being essential for the subsequent insertion of the products into the collection pockets 30, fixed on a endless conveyor that advances in the direction indicated by the arrow F, as will be better described below.

In the exemplary embodiment illustrated, the endless conveyor, indicated as a whole by the letter T, comprises two flat belts 1, 2 placed side by side, preferably made of metal, on the back of which are mounted said collection pockets 30, arranged in groups 3. The belts 1, 2 are driven independently by means of variable-speed motors, and can therefore move at different speeds depending upon the requirements of the feed or picking up cycles of the products P, allowing the groups 3 of pockets to follow each other between a product feed area 6 and a diversion or loading area 7, so as to guarantee continuity in feeding of the products.

The apparatus according to the embodiment illustrated in the appended drawings essentially corresponds to that forming the subject of patent application MI-94A 001703, which should be referred to for further details on construction and operation thereof.

Each belt 1, 2 is driven by a respective motor M1, M2, disposed at a corresponding end of the conveyor T and transmitting the drive, by means of a respective reduction unit, to a corresponding pulley 41, 42. The other pair of pulleys 41', 42', on the other hand, is idle.

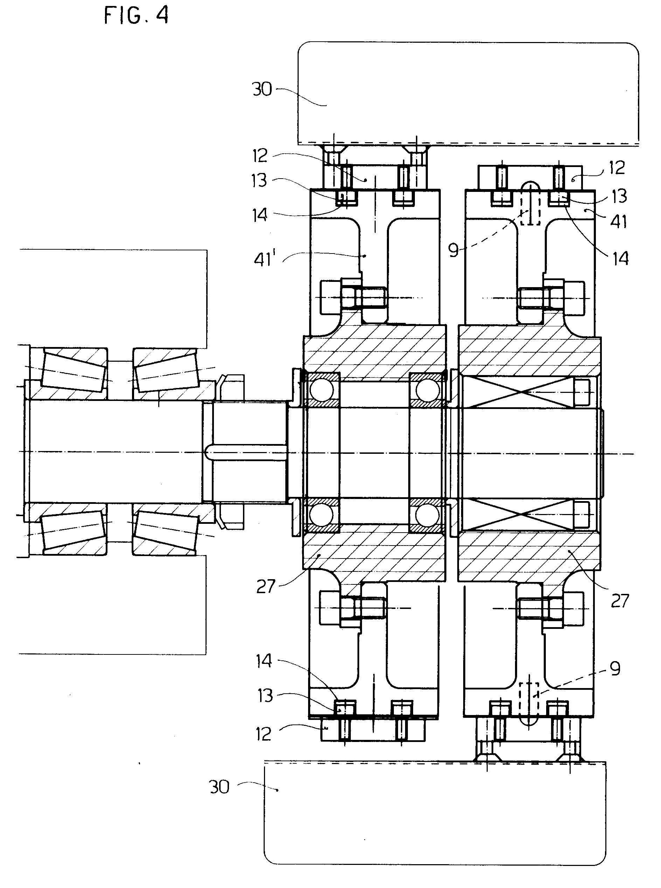

Synchronization teeth 9 are provided on the circumference of each drive pulley (see in particular the drive pulley 41 in Figure 4), these teeth being able to enter corresponding equidistant holes 8, provided along the midline of each belt 1, 2, so as to avoid problems linked to sliding between the belt and the pulley, and the relative loss of precision. Pairs of holes 11 are also provided on the belts 1, 2, these also at regular intervals, which make it possible to hook both the groups of pockets 3, in the manner that will be described below, and the blocks 12, fixed from beneath by means of screws whose heads 13 slid in special grooves 14 made in the drive pulleys 41, 42 and the return pulleys 41', 42', thus acting as a guide for the belts and ensuring alignment.

Along the rectilinear portions of the conveyor, the belts 1, 2 slide on guides 17, having parallel grooves 18 able to receive the heads 13 of the fixing screws of the blocks 12.

The belts 1, 2 are also guided laterally by a central guide 15 and by a respective external side guide 16.

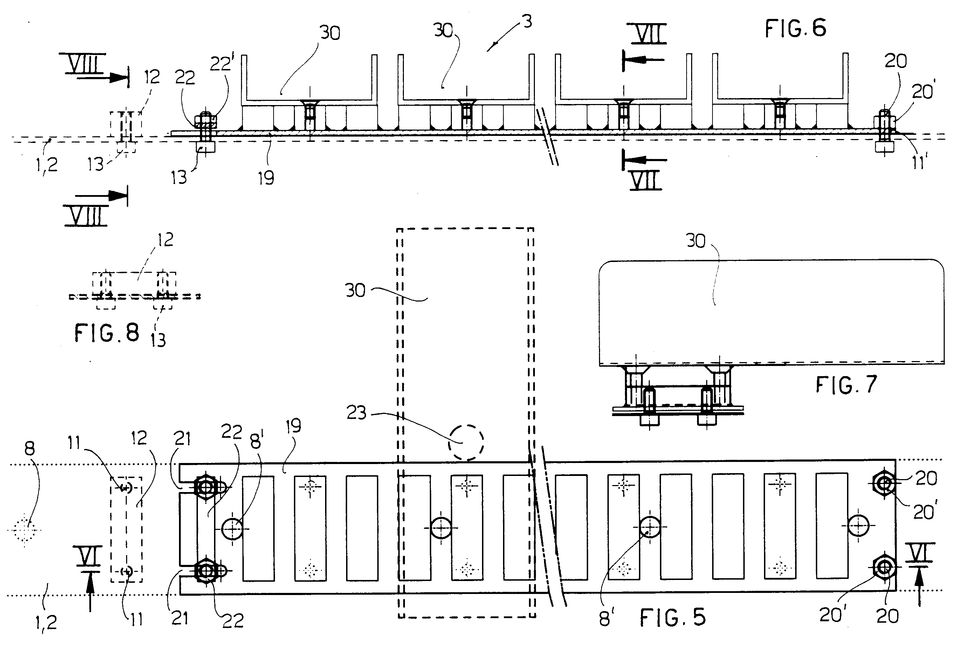

The groups 3 of pockets 30 are each fixed on a rectangular foil 19 (see in particular Figures 5 and 6), which consists in particular of a portion of metal belt that has the same dimensional characteristics as the conveyor belts 1, 2 (same width), the same distance between the centers of the central holes indicated by 8', but slightly wider than the holes 8, to allow coupling of the synchronization teeth 9 of the drive pulleys 41, 42.

Each foil or portion of metal belt 19 has, at one end, a pair of slits 21, which will engage with a block 22, fixed by means of a pair of screws with heads 13, inserted in pairs of holes 11, and engaged externally by respective nuts 22'. In this way the corresponding end of the foil 19 is not constrained rigidly to the belt 1 or 2 beneath, so as to allow relative sliding between the foil and the conveyor belt, allowing winding round the curved portions of the pulleys. The other end of the foil 19, on the other hand, is firmly fixed onto the back of the conveyor belt by means of a pair of screws 20, with respective fixing nuts 20', the screws 20 being inserted in a pair of holes 11 in the belts 1, 2 and in a corresponding pair of holes 11' made in the foil 19.

The solution adopted allows rapid assembly and dismantling of the foils 19 which already have the individual pockets 30 of the desired size to contain the pre-mounted product P.

It will therefore be sufficient to insert these foils 19 between the pairs of lateral sliding guides 15, 16, which for this purpose have at least one break along the course of the endless conveyor T, and once the slits 21 have been centered between the corresponding pair of screws with heads 13, the other end of the foil 19 will be fixed by screwing the nuts 20' onto the screws 20, or with other rapid fixing means.

Thanks to this rapid system for coupling and replacing portions of metal belts or foils 19 with the pockets 30 of the various desired sizes pre-mounted, the time taken for a change of size is drastically reduced, allowing increases in packing line productivity. The proposed system is simple and easy to adjust, even for non-specialized personnel.

According to another characteristic of the invention, the product P is conveyed in a stable manner along the conveyor T.

In fact, the product feeding speeds can be rather high, and since the pockets must receive sometimes fragile products and carry out translations at very high speeds, it is necessary to stabilize the products as much as possible inside the pockets, avoiding jolting due to the strong accelerations, decelerations, intermittent movements, which would lead to damage (consider for example oven products such as snacks with delicate chocolate coating) and also to unwanted overturning of the products, which, because of irregular positioning, would no longer allow correct final picking up thereof, by known picking up systems such as robots, suction handlers, grippers, chain diverters, etc.

In order to stabilize the product, according to the invention, at least one hole 23 is made in the central part of the pockets 30, communicating with a tubing 24 below, connected to a vacuum pump or to other suction systems.

This will provide a stabilization of the products P (generally wrapped in protective film), which will be held on the bottom of the pockets 30 by suction. In the portion, indicated by 25 (Figure 2), comprised between the feeding area 6 of the product P and the picking up area 7, the suction will be of the continuous type, whereas in the picking up area 7 there will be suction of an intermittent type 26.

Using two separate chambers 25, 26 it is possible to remove the suction precisely at the time of picking up, or diversion, of the products for loading into cases, corrugated cardboard cartons, various containers, etc. and immediately after loading restore the suction to maintain the new products arriving with the next group of pockets in a stable position, which ensures the continuity of the feed cycle.

The groups of pockets continuously following after one other constrained to the continuous speed changes of the metal conveyor belts, with consequent accelerations, decelerations, intermittent (or even continuous) movements to receive the products in the pockets and pauses for picking up the groups of products, which allow different groups of pockets to follow after one another continuously are made possible by the electronic synchronization of the direct current motors managed by an axle control.

Any possibility of the groups of pockets 30 entering into collision is controlled by the system program logic. A further safety system has nevertheless been foreseen which, thanks to the opposite polarization of the metal belts 1, 2 in the case of collision and therefore accidental contact between two different trains of pockets, causes emergency stopping of the machine.

For this purpose, the hubs 27 of the pulleys are made of insulating material and at least two sliding contacts 28 are provided to polarize the metal conveyor belts 1, 2 with a low voltage and consequently the metal pockets 30 constrained thereto. The sliding contacts 28 are pushed elastically against the metal belts 1, 2 by respective metal springs 50, connected to electrical supply wires 51.

If through programming errors, phase differences of the belts, incorrect assembly of the groups of pockets or other reasons, different groups 3 of pockets 30 should approach each other to the point of direct contact, closure of the circuit would produce immediate stopping of the machine, avoiding damage thereto.

In the preceding description, reference has been made to an embodiment of a conveyor comprising two metal belts alongside each other 1, 2 with respective groups 3 of pockets 30 that follow one another, a solution which seems the most advantageous.

It is clear, however, that the invention is not restricted to this particular embodiment.

Thus, for example, the endless conveyor T can be made up, in a extreme case, by a single endless element, particularly a belt, or by more than two endless elements.

## Claims

1. An apparatus for conveying groups of products or packs (P), coming from a production line and directed, for example, toward cartooning, comprising a conveyor (T), consisting of at least one endless conveyor (1,2) provided with at least one group (3) of pockets (30), able to receive said products (P) individually, to convey them from a pick-up area (6) to an unloading or diverting area (7), characterized in that said groups (3) of pockets (30) are removably mounted on the conveyor (1,2), so as to be interchangeable with groups of pockets of a different number and size.

2. An apparatus according to claim 1, characterized in that each group (3) of pockets (30) is mounted on the conveyor (1, 2), so that at least one end thereof is not rigidly constrained to the conveyor, in order to allow slight longitudinal sliding.

3. An apparatus according to claim 1 or 2, characterized in that said endless conveyor (1, 2) is a flat metal belt, and said groups (3) of pockets (30) are arranged on a foil (19), of the same width as the belt (1, 2), which can be fixed on the back of said belt by means of rapid fixing means.

4. An apparatus according to claim 3, characterized in that said foil (19) carrying a group (3) of pockets (30) has, at one of its ends, slits (21) for non-rigid engagement with corresponding screw means (13) and, at its other end, rigid fixing means (20, 20').

5. An apparatus according to claim 3 or 4, characterized in that on said metal belt (1, 2) pairs of holes (11) are provided at regular intervals longitudinally for engagement of said means (13, 20) of fixing the ends of said foil (19), as well as for engagement of screws with heads (13) acting as guide means for the belt, sliding in special grooves (18, 14), made respectively in supports (17) provided in rectilinear portions of the endless course and on the surface of the end pulleys (41, 42'; 41', 42) on which the belts are wound.

6. An apparatus according to any one of claims 3 to 5, characterized in that said belt (1, 2) has holes (8) at regular intervals along its longitudinal midline for engagement of synchronization teeth provided on the corresponding drive pulley (41, 42), said foils (19) supporting the groups (3) of pockets also being provided with central holes (8') that can be positioned in register with said holes (8) and have a slightly larger diameter than the latter.

7. An apparatus according to any one of claims 3 to 6, characterized in that two metal belts are provided side by side (1, 2), driven at variable speeds, each guided between a central guide (15) and a respective external side guide (16).

8. An apparatus according to any one of the preceding claims, characterized in that suction means (24, 23) are provided inside said pockets (30), to stabilize the product (P) during transportation.

9. An apparatus according to any one of claims 3 to 8, characterized in that said end pulleys (41, 42'; 42, 41') are made of insulating material, said metal belts (1, 2), and therefore the pockets (30) mounted on them, being polarized with a low voltage by means of respective sliding contacts (28) for emergency stopping of the machine in the event of the groups (3) of pockets entering into collision.
